Europäisches Patentamt

European Patent Office

Office européen des brevets

(11) Veröffentlichungsnummer: **0 257 108 B1**

# EUROPÄISCHE PATENTSCHRIFT

(45) Veröffentlichungstag der Patentschrift: **28.10.92**

(51) Int. Cl.5: **G11B  5/845**

(21) Anmeldenummer: **86110417.2**

(22) Anmeldetag: **28.07.86**

(54) **Verfahren und Anordnung zur Verbesserung der Dispersion magnetischer Partikel in magnetischer Beschichtungsmasse.**

(43) Veröffentlichungstag der Anmeldung:
**02.03.88 Patentblatt  88/09**

(45) Bekanntmachung des Hinweises auf die
Patenterteilung:
**28.10.92 Patentblatt  92/44**

(84) Benannte Vertragsstaaten:
**AT BE CH DE FR GB IT LI NL SE**

(56) Entgegenhaltungen:
**EP-A- 0 173 840**
**EP-A- 0 204 860**
**DE-B- 1 294 476**

**PATENT ABSTRACTS OF JAPAN, Band 7, Nr. 70 (P-185)[1215], 23. März 1983; & JP-A-57 212 626 (FUJITSU K.K.) 27-12-1982**

(73) Patentinhaber: **IBM DEUTSCHLAND GMBH**
**Pascalstrasse 100**
**W-7000 Stuttgart 80(DE)**

(84) Benannte Vertragsstaaten:
**DE**

(73) Patentinhaber: **International Business Machines Corporation**
**Old Orchard Road**

**Armonk, N.Y. 10504(US)**

(84) Benannte Vertragsstaaten:
**BE CH FR GB IT LI NL SE AT**

(72) Erfinder: **Trippel, G., Dr. Dipl.-Phys.**
**Steinenbronner Strasse 15**
**W-7032 Sindelfingen(DE)**
Erfinder: **Brunsch, A., Dr. Dipl.-Phys.**
**Am Bosperweg 8**
**W-7000 Stuttgart 1(DE)**
Erfinder: **Schmidt, C., Dr. Dipl.-Phys.**
**Alte Stuttgarter Strasse 84**
**W-7037 Magstadt(DE)**
Erfinder: **Steiner, W., Dipl.-Ing.(FH)**
**Zeisigweg 17/1**
**W-7030 Böblingen(DE)**
Erfinder: **Rink, H., Dipl.-Ing. (FH)**
**Hintergasse 19**
**W-6085 Nauheim(DE)**

(74) Vertreter: **Herzog, Friedrich Joachim, Dipl.-Ing.**
**IBM Deutschland GmbH Schönaicher Strasse 220**
**W-7030 Böblingen(DE)**

EP 0 257 108 B1

## Beschreibung

Die Erfindung betrifft ein Verfahren zur Verbesserung der Dispersion von magnetischen Partikeln, die zur Bildung einer magnetischen Beschichtungsmasse in einem Harz-/Lösungsmittel flüssig dispergiert sind. Weiterhin betrifft die Erfindung eine Anordnung zum Durchführen des Verfahrens.

Bei der Herstellung partikularer Magnetaufzeichnungsträger, wie insbesondere partikulare Magnetplatten und Magnetbänder wird ein Substrat mit einer zunächst flüssigen Dispersion verwendet, in der Magnetteilchen in einer Polymerlösung aus Harz und Lösungsmittel dispergiert sind. Die flüssige Dispersion wird auf den Träger aufgebracht. Durch Verdampfen des Lösungsmittels und Festwerden des verbleibenden Bindermaterials werden die magnetischen Partikel in ihrer Lage innerhalb des Bindermaterials festgehalten. Üblicherweise wird bei der Herstellung von Magnetplatten die Beschichtungsmasse auf das Plattensubstrat aufgesprüht und durch Drehen mit hoher Drehzahl abgeschleudert, so daß eine dünne Schicht übrig bleibt. Bei der Herstellung von Magnetbändern wird die flüssige Dispersionsbeschichtungsmasse in dünner Schicht aufgestrichen.

Bei der Herstellung von sehr homogenen Schichten, sowohl auf Magnetplatten als auch auf Magnetbändern, ist es von entscheidender Bedeutung, daß die Magnetpartikel vor dem Beschichtungsprozeß gut dispergiert sind. Aufgrund der magnetischen Anziehungskrätte und auch durch andere Wechselwirkungen, wie z.B. van der Waal'sche Kräfte neigen die Partikel zur Agglomeration. Es können sich auch in der flüssigen Beschichtungsmasse Flockulate bilden.

Um bei der Herstellung der Schichten eine möglichst gleichmäßige Ausrichtung und Verteilung der Magnetpartikel in dem Bindersystem zu erhalten, wird anschließend an das Beschichten eine magnetische Orientierung der Partikel vorgenommen. Damit werden die Partikel, aber auch die Agglomerate und Flockulate ausgerichtet, ohne daß es zu einer vollständig homogenen Verteilung kommt. Es kann außerdem durch das Orientierungsfeld ein Aufreißen der magnetischen Schicht erfolgen, d.h. es ziehen sich magnetische Partikel lokal zusammen und bilden den sogenannten Windrow-Effekt. Dies führt zu magnetischen Fehlstellen auf dem fertigen Magnetaufzeichnungsträger.

Im Zusammenhang mit der Orientierung der Partikel ist aus der Europäischen Patentanmeldung 0 173 840 eine Anordnung und ein Verfahren bekannt, bei der vor der eigentlichen Orientierung der Partikel in der Ebene des Aufzeichnungsträgers eine Desorientierung der magnetischen Partikel stattfindet. Dabei wird die Beschichtungsmasse nach Aufbringen auf einen Träger vor dem Trocknen einem magnetischen Feld wechselnder Richtung ausgesetzt. Zur Erzeugung dieses Feldes wird eine Vielzahl von Permanentmagneten auf einer rotierbaren Trägerplatte angeordnet derart, daß die Magnetfelder senkrecht zur Ebene des Substratträgers und der sich darauf befindlichen Beschichtungsmasse stehen. Durch Rotation der Platte um eine senkrecht zum Träger befindliche Achse wird die Beschichtungsmasse somit einem magnetischen Feld wechselnder Richtung ausgesetzt. Die Richtung der Änderung des wechselnden Feldes steht dabei senkrecht zur Ebene des mit der magnetischen Beschichtungsmasse beschichteten Trägers. Nachdem in dieser Weise die einzelnen Partikel der Beschichtungsmasse desorientiert sind, werden sie anschließend durch einen Orientierungsmagneten in der Ebene des Substratträgers in einer bestimmten Richtung ausgerichtet. Diese bekannte Vorrichtung und das dabei angewendete Verfahren dient der Desorientierung der Magnetpartikel bevor sie dann in bestimmter Weise in der Ebene des Substratträgers orientiert werden. Ob diese Anordnung und das dabei zur Anwendung kommende Verfahren auch zu einer Dispergierung der einzelnen Partikel beiträgt, läßt sich dieser Literaturstelle nicht entnehmen. Hier ist auch nicht andeutungsweise zu entnehmen, daß beabsichtigt ist, sie zur Dispergierung, d.h. der Vereinzelung der einzelnen Magnetpartikel und ihrer völlig gleichmäßigen und homogenen Verteilung in der Beschichtungsmasse anzuwenden. Somit stellt diese bekannte Anordnung und das dort verwendete Verfahren eine Maßnahme zur Bearbeitung einer Beschichtungsmasse mit magnetischen Partikeln dar, wobei die Bearbeitung in der Desorientierung der Partikel und anschließenden Orientierung der Partikel, jedoch nicht in der Dispergierung der Partikel besteht.

Aus dem JP-A-57-212626 - Abstract ist ein Beschichtungsverfahren für magnetische Aufzeichnungsträger bekannt. Auf einem Aluminiumträger wird eine magnetische Beschichtungsmasse aufgebracht und durch Schleudern gleichmäßig verteilt. Zwei Paare von Magneten, eines oberhalb und eines unterhalb der Platte sorgen dafür, daß ein horizontales Feld in der Ebene des Trägers und in der Beschichtungsmasse erzeugt wird. Dieses horizontale Feld richtet die Beschichtungsmasse tangential zur Drehrichtung aus. Diagonal gegenüber dieser Magnetanordnung ist auf einer Seite der Platte ein Permanentmagnet vorgesehen, dessen Feldlinien senkrecht zur Ebene des Aufzeichnungsträgers stehen. Damit wird bei Rotation der Platte die Beschichtungsmasse auch diesem senkrechten Feld unterworfen. Abwechselnd kommt bei Drehung die Beschichtungsmasse in den Einfluß des horizontalen Orientierungsfeldes und des vertikalen Feldes. Durch diese Anordnung soll die Verteilungsfähigkeit des magnetischen Materials in der Beschichtungsmasse vor dem Trocknen verbessert werden, obwohl eine gewisse Verbesserung der Dispersion dabei nicht auszuschließen ist. Betrachtet man die Feldkonfiguration im Hinblick auf die Feldkonfiguration, die in der EP 0 173 840 gegeben ist, so stellt man fest, daß dort eine volle Drehung senkrecht zum Substratträger des Feldes erfolgen kann, während bei vorliegender Anordnung durch das vertikale Feld ein jeweiliges Aufrichten des Magnetmaterials in der vertikalen Richtung erfolgt, bevor durch das eine horizontale Feld die Ausrichtung wieder in tangentialer Richtung innerhalb der Ebene der magnetischen Schicht erfolgt. Auch diese Anordnung ist zur Verbesserung der Orientierung bzw. Ausrichtung des Magnetmaterials vorgesehen, nicht jedoch aufgaben- und lösungsgemäß geeignet oder auch nur andeutungsweise gedacht für eine Lösung gemäß vorliegender Erfindung zur Verbesserung der Dispersion der Magnetpartikel im Trägermaterial bis auf das einzelne Partikel hinunter.

Zur guten Dispergierung ist es üblich, daß geeignete mechanische Mittel, wie beispielsweise das Mahlen der Partikel in Kugelmühlen, angewendet werden und daß chemische Dispersionsmittel verwendet werden. Es hat sich in der Praxisjedoch herausgestellt, daß die Stabilität der Dispersion nach wie vor zu wünschen übrig läßt. Darüber hinaus läßt sich eine zumindest lockere Flockulation der Magnetteilchen mit der Zeit nicht verhindern. Es ist auch bereits in der Praxis versucht worden, die Beschichtungsmasse kurz vor dem Beschichtungsprozeß mit Hilfe von Ultraschall zu bearbeiten und dadurch die Dispergierung der Magnetpartikel zu verbessern. Diese Methode hat sich jedoch auch nicht als wirkungsvoll erwiesen, insbesondere auch deswegen, weil die damit verbundene Wärmeentwicklung in der Beschichtungsmasse für einzelne Komponenten der Beschichtungsmasse abträglich ist.

Aufgabe vorliegender Erfindung ist es, ein Verfahren anzugeben, welches eine einfache und sehr wirkungsvolle sowie zeitbeständige Dispergierung der Magnetpartikel in dem Bindersystem sicherstellt. Dadurch soll es ermöglicht werden, eine extrem dünne Schicht homogen verteilter Magnetpartikel auf einem Träger aufbringen zu können. Letztlich soll damit die Herstellung von extrem zuverlässigen und leistungsfähigen magnetischen Aufzeichnungsträgern ermöglicht werden.

In vorteilhafter Weise wird diese Aufgabe erfindungsgemäß dadurch gelöst, daß zur Verbesserung der Dispersion der magnetischen Partikel die Beschichtungsmasse einem magnetischen Rotationsfeld ausgesetzt wird, das aus mindestens zwei Wechselfeldern unterschiedlicher Frequenz, insbesondere 10 und 27 Herz, gebildet wird und deren Parameter Frequenz, Feldstärke und Dauer so gewählt werden, daß sich die magnetischen Partikel möglichst homogen in der flüssigen Trägermasse verteilen.

Gemäß einer vorteilhaften Weiterbildung und Anwendung des der Erfindung zugrunde liegenden Gedankens ist ein Verfahren zur Ermittlung der Parameter des erfindungsgemäßen Verfahrens dadurch gekennzeichnet, daß eine dünne Filmschicht flüssiger Beschichtungsmasse in einem Mikroskop im Durchlicht bei etwa 200facher Vergrößerung betrachtet wird, durch geeignete Anordnung von Elektromagneten ein in Frequenz, Stärke und Dauer variables magnetisches Rotationsfeld in der Ebene der Filmschicht der Beschichtungsmasse erzeugt wird, durch Beobachtung des Durchlichtbildes diejenige Frequenz und Stärke ermittelt wird, die der möglichst guten Homogenisierung und ggf. Ausrichtung der Partikel in der Beschichtungsmasse entspricht, und diese ermittelten, für die bestimmte Beschichtungsmasse charakterisierenden, typischen Werte registriert werden.

Gemäß einer vorteilhaften Anordnung zur Durchführung dieser Verfahren sind mindestens zwei im Winkel zueinander angeordnete Elektromagnete um ein die Beschichtungsmasse führendes Rohr herum derart angeordnet, daß das zwischen einander zugeordneten Polen der Elektromagnete erzeugte magnetische Rotationsfeld im wesentlichen senkrecht zur Achse des Rohres steht, und daß die Elektromagnete mit einem in Frequenz, Amplitude und Dauer veränderbarem Strom beaufschlagt sind.

Gemäß einer vorteilhaften Variante des erfindungsgemäßen Verfahrens hat es sich als äußerst effektvoll erwiesen, bei zwei Wechselfeldern unterschiedlicher Frequenz für das eine beispielsweise eine Frequenz von 10 und für das andere eine Frequenz von 27 Hz vorzusehen. Vorteilhafterweise ist die Amplitude der beiden Wechselfelder unterschiedlicher Frequenz gleich gewählt und die magnetische Feldstärke knapp unterhalb der Koerzitivfeldstärke der Partikel der entsprechenden Beschichtungsmasse gewählt. Praktische Versuche haben ergeben, daß die Einwirkungsdauer eines solchen höchst wirkungsvollen, unregelmäßig rotierenden Feldes nur von kurzer Dauer, 10 Sekunden sind dabei ausreichend, zu sein hat, um eine enorm günstige Verbesserung der Dispersion der magnetischen Partikel in dem Bindersystem zu erreichen. Überraschenderweise ist die Stabilität dieser verbesserten Dispersion derart nachhaltig, daß eine wesentliche Verschlechterung nach drei Tagen Standzeit der Masse kaum feststellbar war.

Weitere vorteilhafte Ausgestaltungen und Anwendungen des erfindungsgemäßen Verfahrens sind in den Unteransprüchen niedergelegt.

Weitere Gegenstände, Ausführungsformen und Vorteile der Erfindung ergeben sich aus der nachfolgenden Beschreibung des erfindungsgemäßen Verfahrens und der Anordnungen zur Durchführung des Verfahrens, jeweils unter Bezugnahme auf die in der Zeichnung dargestellten Ausführungsformen. In der Zeichnung zeigen:

Fig. 1 schematisch in Draufsicht die erfindungsgemäße Dispergiervorrichtung, im wesentlichen bestehend aus zwei Elektromagnetpaaren, die um ein Rohr herum angeordnet sind, sowie die angeschlossene Stromversorgung;

Fig. 2 eine Seitenansicht eines Elekltromagnetpaares entlang der Linie 2-2 aus Fig. 2;

Fig. 3 schematisch die Draufsicht einer geschlossenen Ringmagnetanordnung mit zwei einander zugeordneten innenliegenden Elektromagnetpolpaaren;

Fig. 4 in perspektivischer Ansicht schematisch die Anordnung aus Fig. 3, jedoch ohne angedeutete Wicklungen;

Fig. 5 schematisch eine Beschichtungsanlage mit Vorratsgefäß, Umlaufpumpe und Umlaufleitung sowie der erfindungsgemäßen Dispergiervorrichtung;

Fig. 6 schematisch die Seitenansicht einer Anordnung zur Ermittlung der optimalen Parameter unter dem Mikroskop;

Fig. 7 die magnetische Susceptibilität, die ein Maß für Dispersionsqualität einer Beschichtungsmasse ist, für ein und dieselbe Masse, jedoch einmal nicht und einmal gemäß dem erfindungsgemäßen Verfahren magnetisch dispergiert;

Fig. 8 dasselbe wie Fig. 7, jedoch für eine andere magnetische Beschichtungsmasse;

Fig. 9 die magnetische Susceptibilität als Maß für die Dispersion einer dritten magnetischen Beschichtungsmasse, auch hier mit und ohne magnetische Dispergierung gemäß vorliegenden Erfindung; und

Fig. 10 schematisch die Verbesserung der magnetischen Dispergierung in Abhängigkeit von der angewandten Feldstärke.

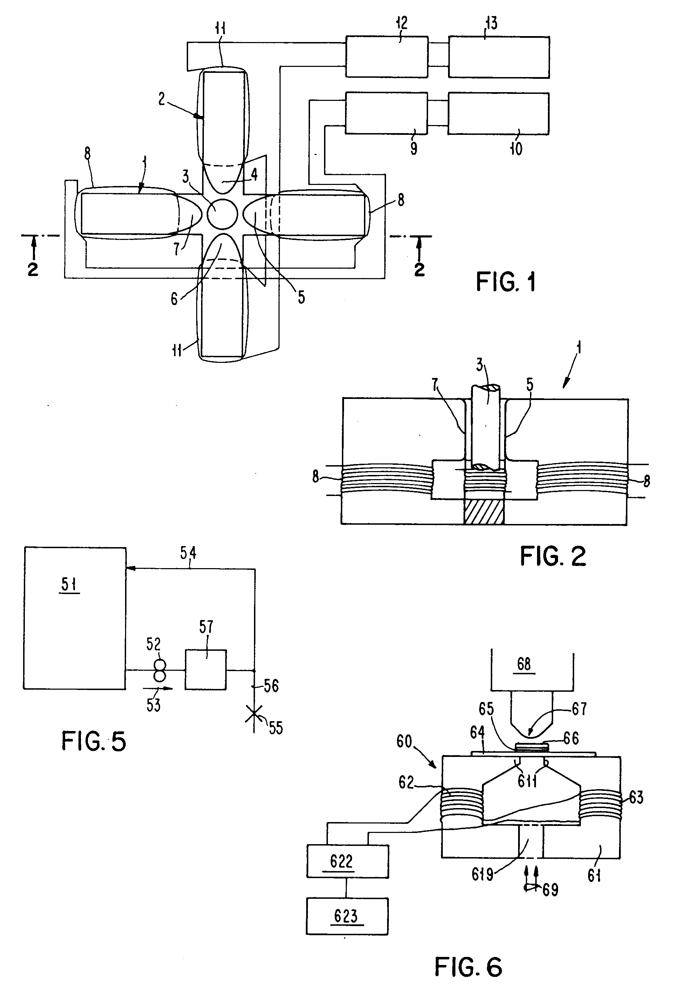

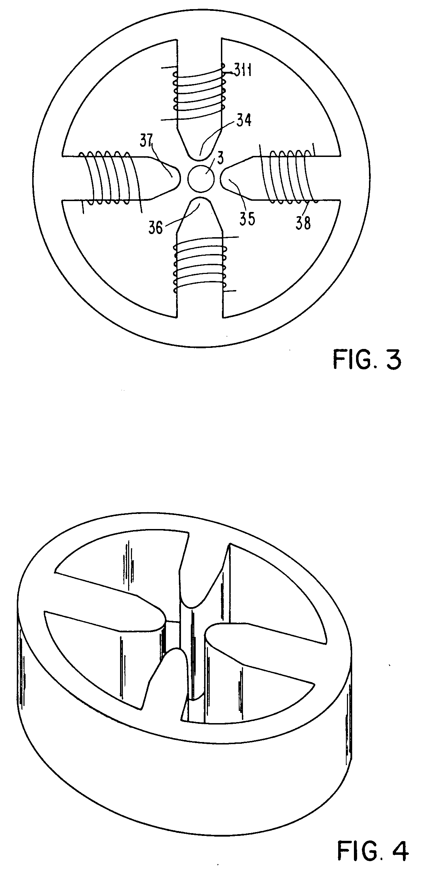

In Fig. 1 ist schematisch eine Dispergiervorrichtung dargestellt, mit der das erfindungsgemäße Verfahren in vorteilhafter Weise durchgeführt werden kann. Die Anordnung besteht im Kern aus zwei im Winkel zueinander, vorzugsweise senkrecht zueinander, angeordneten Elektromagneten 1 und 2 sowie einem Rohr 3, in dem die zu dispergierende Beschichtungsmasse geführt ist. Das Rohr 3 wird allseits von den Polschuhen 4, 5, 6 und 7 der Elektromagneten 1 und 2 umgeben. Das erzeugte Feld durchsetzt Rohr 3 senkrecht. Dies ist aus der Seitenansicht der Fig. 2 gut zu ersehen. Diese Darstellung zeigt darüber hinaus auch gut, daß es vorteilhaft ist, die Polschuhe, wie beispielsweise die Polschuhe 5 und 7 des Elektromagneten 1 relativ lang zu gestalten, damit das Rohr 3 auf einer längeren Strecke umgeben ist.

Dem Elektromagneten 1 ist eine Erregerwicklung 8 zugeordnet, die jeweils hälftig auf den Schenkeln des Elektromagneten 1 unterhalb der Pole 5 und 7 angeordnet ist. Die Erregerwicklung 8 wird von einer Stromversorgung 9 gespeist, welche ihrerseits von einem Funktionsgenerator 10 gesteuert wird. Der Elektromagnet 2 wird von einer Erregerwicklung 11 erregt, die ebenfalls in zwei Teilen um die Schenkel unterhalb der Pole 4 und 6 angeordnet ist. Diese Erregerwicklung 11 wird von einer Stromversorgung 12 gespeist. Ein Funktionsgenerator 13 steuert die Stromversorgung 12.

Die Beschichtungsmasse, die in dem Rohr 3 enthalten ist, wird im Abschnitt zwischen den Polen 5 und 7, in Fig. 2 gut zu erkennen, sowie den Polen 4 und 6 einem Magnetfeld ausgesetzt, welches zwischen den Polen 5 und 7 einerseits durch die Spule 8 und den Polen 4 und 6 andererseits durch die Spule 11 erzeugt wird. Mit Hilfe der Funktionsgeneratoren 10 und 13 werden die Stromversorgungen 9 bzw. 12 so gesteuert, daß sie an die Spulen 8 bzw. 11 Wechselfelder unterschiedlicher Frequenz und Größe anzulegen in der Lage sind. Dadurch entsteht jeweils ein Wechselfeld zwischen den Polen 4 und 6 einerseits und den Polen 5 und 7 andererseits. In Überlagerung dieser beiden Wechselfelder entstehen dabei rotierende bzw. sich drehende Felder im Bereich zwischen den Polen. Diese Felder wirken auf das im Rohr 3 befindliche magnetische Beschichtungsmaterial ein.

Mit welcher Frequenz, mit welcher Feldstärke und für welche Zeit sowie ohne oder mit Phasenkopplung die Felder auf das Beschichtungsmaterial im Rohr 3 einwirken, läßt sich im einzelnen im Hinblick auf eine möglichst gute Homogenisierung der Beschichtungsmasse, d.h. der best möglichen Dispergierung der Magnetpartikel in dem Bindersystem am besten experimentell ermitteln. Es wird später noch gezeigt, wie diese Parameter gemäß einer vorteilhaften Ausgestaltung des erfindungsgemäßen Verfahrens ermittelt werden. Entscheidend ist die Erkenntnis und die Anwendung der Möglichkeit, mit magnetischen Rotationsfeldern bestimmter Frequenz, Stärke und Dauer eine Verbesserung der Dispergierung der Magnetpartikel in der flüssigen Trägermasse erzielen zu können und in Wirklichkeit in der Praxis auch zu erreichen.

In den Figuren 1 und 2 sind kreuzweise angeordnete Elektromagnete 1 und 2 gezeigt, die Hufeisenform haben und bei denen der magnetische Rückschluß die Durchführung des Rohres 3 durch die Polschuhe 5 und 7 bzw. 4 und 6 - schwierig gestalten könnte. In den Figuren 3 und 4 ist gemäß einer vorteilhaften Ausgestaltung der erfindungsgemäßen Anordnung gemäß vorliegender Erfindung eine abgewandelte Form der Anordnung der Elektromagneten dargestellt. Diese Anordnung erlaubt es, daß das Rohr 3 einfach durch die Polpaare 35 und 37 sowie 34 und 36 in gerader Linienführung hindurchgeführt werden kann. Dabei zeigt die Fig. 3 eine Draufsicht mit jeweils angedeuteten Erregerspulen 38 und 311, die jeweils ebenfalls zur Hälfte die einzelnen Schenkel der zugeordneten Pole umgreifen.

Wie der Draufsicht in Fig. 3 und der perspektivischen Ansicht in Fig. 4 gut zu entnehmen ist, sind die einzelnen Schenkel, die die Wicklungen tragen und zu den Polen 34, 36 bzw. 35, 37 führen, auf ihrer Rückseite ringförmig verbunden. Diese Ringe bilden den magnetischen Rückschluß. Durch diese gewählte Anordnung ist ein Einbau in ein in der Praxis zu benutzendes Beschichtungssystem von magnetischen Aufzeichnungsträgern, in dessen Rohrverlauf eine Dispergiervorrichtung gemäß vorliegender Erfindung angewendet wird, praxisnah vereinfacht. Nicht dargestellt in Fign. 3 und 4 ist der Anschluß an Stromversorgung und Funktionsgeneratoren zur Erzeugung und Steuerung der sich zwischen den Polen ausbildenden und überlagernden magnetischen Feldern, die dann in erfindungsgemäßer Weise auf das im Rohr 3 befindliche Trägermaterial mit den magnetischen Partikeln einwirkt.

Fig. 5 zeigt schematisch eine Anordnung, wie sie bei der Herstellung von magnetischen Aufzeichnungsträgern benutzt wird, und zwar die Beschichtungsvorrichtung. In einem Behälter 51 ist die Beschichtungsmasse enthalten. Sie wird durch eine Pumpe 52 in Richtung des Pfeiles 53 durch eine Umlaufleitung 54 gepumpt. An der Stelle 55 ist die Beschichtungspistole angedeutet, die über einen Rohrstutzen 56 versorgt wird. Zwischen dem Rohrstutzen 56 und der Pumpe 52 ist die erfindungsgemäße Dispergiervorrichtung 57 angeordnet. Durch sie wird sichergestellt, daß das Trägermaterial auf jeden Fall kurz vor Erreichen der Beschichtungspistole 55 nochmals dispergiert wird, um somit sicherzustellen, daß bestens dispergiertes Material auf den Aufzeichnungsträger aufgespritzt wird. Möglich ist auch die Anordnung der Dispergiervorrichtung 57 um den Rohrstutzen 56 herum, direkt vor der Beschichtungspistole 55. Dort wird dann keine fließende Masse mehr dispergiert, sondern im wesentlichen stehende.

Fig. 6 zeigt schematisch den Aufbau einer Anordnung zur Durchführung des erfindungsgemäßen Verfahrens zur Feststellung der Parameter für die Einstellung der Frequenz, der Feldstärke und der Zeit des magnetischen Rotationsfeldes, welches auf die Beschichtungsmasse einwirken soll, um die darin enthaltenen magnetischen Partikel möglichst gut zu dispergieren. Vorausgeschickt sei, daß die Anordnung in Fig. 6 nur einen Elektromagneten 60 in Seitenansicht zeigt, es jedoch einen vorzugsweise im rechten Winkel dazu angeordneten weiteren Elektromagneten mit zugehöriger Stromversorgung gibt. Beide Elektromagneten zusammen sind dann in der Lage, durch ihre überlagerten Felder die optimalen sich drehenden Felder zu erzeugen.

Der in Fig. 6 gezeigte Elektromagnet 60 enthält einen magnetischen Weicheisenkern 61 mit relativ spitz zulaufenden Polen 611. Das relativ spitze Zulaufen der Pole 611 ist derart gestaltet, daß eine starke Feldkonzentration im linearen Außenbereich des Elektromagneten 60 erzielbar ist. Der Grund dafür wird später noch erläutert. Weiterhin enthält der Weicheisenkern 61 eine Öffnung 619 zentral im die Schenke verbindenden Jochteil. Auf den Schenkeln sind Erregerwicklungen 62 und 63 aufgebracht, die von einer Stromversorgung 622 versorgt werden. Die Stromversorgung 622 ihrerseits wird von einem Funktionsgenerator 623 gesteuert. Mit dieser Steuerung ist es möglich, ein in Frequenz, Stärke und Dauer variables Feld zwischen den Polen 611 des Elektromagneten 60 zu erzeugen.

Die beiden Pole 611 überbrückend ist auf dem Elektromagneten 60 eine Glasplatte 64 angebracht, die ein Mikroskopierdeckglas sein kann. Darauf ist im Bereich der Lücke zwischen den beiden Polen 611 ein Tropfen der zu untersuchenden und zu homogenisierenden, dispergierenden Beschichtungsmasse aufgebracht, der durch ein abdeckenden Mikroskopierglas 66 zu einer dünnen Filmschicht 65 auf der Glasplatte 64 gepreßt wird. Es entsteht also zwischen den beiden Mikroskopierdeckgläsern 64 und 66 ein dünner Film 65 der zu untersuchenden Beschichtungsmasse. Es ist auch möglich ohne das obere Deckglas 66 Untersuchungen durchzuführen, vorausgesetzt man kann einen dünnen Film der Beschichtungsmasse herstellen. In diesem Fall muß auch gewährleistet sein, daß während der Beobachtungszeit kein oder nur wenig Lösungsmittel aus der Filmschicht 65 abdampft. Oberhalb des Films 65 bzw. des Mikroskopierdeckglases 66 ist das Objektiv 67 eines Mikroskops 68 angeordnet. Die dünne Filmschicht 65 wird durch Lichtstrahlen 69, die die Öffnung 619 im Kern 61 des Elektromagneten 60 durchdringen, im Durchlicht beleuchtet und durch das Objektiv 67 im Mikroskop 68 betrachtbar. Durch die Durchlichtvergrößerung, die vorteilhafterweise etwa 200fach ist, kann die Verteilung der magnetischen Partikel in der flüssigen Beschichtungsmasse mittels des Mikroskops 68 beobachtet werden. Falls es notwendig oder wünschenswert ist, kann an das Mikroskop auch eine Film- oder Videoaufzeichnung angeschlossen werden, so daß ggf. die Struktur und deren Verhalten in den angelegten Feldern aufgezeichnet bzw. vergrößert in größerem Umfang dargestellt werden kann.

Die Bestimmung der für die möglichst gute Homogenisierung und Dispergierung der Magnetpartikel in der Beschichtungsmasse günstigsten Parameter erfolgt nun derart mit der Anordnung in Fig. 6, daß das Durchlichtbild der Filmschicht 65 beobachtet wird. Mit Hilfe des Funktionsgenerators 623 und der Stromversorgung 622 wird das Feld zwischen den Polen 611 des Elektromagneten 60 in Frequenz und Stärke geändert, so daß ein unterschiedliches Magnetfeld zwischen diesen Polen 611 herrscht und auf die Filmschicht 65 einwirkt. In gleicher Weise ist senkrecht dazu eine zweite Elektromagnetanordnung vorgesehen, die in gleicher Weise betrieben wird. Vgl. beispielsweise dazu die Anordnung in Fig. 1, die analog der Anordnung in Fig. 6 ist. Für jede besondere Beschichtungsmasse, von der zwischen den Mikroskopierdeckgläsern 64 und 66 eine dünne Filmschicht 65 beobachtet wird, läßt sich durch systematisches Durchspielen der Frequenzen und der Feldstärken und gleichzeitiges Beobachten des Erscheinungsbildes der Magnetpartikel im Durchlicht des Mikroskopierbildes ermitteln, bei welchen Werten der jeweiligen Parameter die beste Homogenisierung und Dispergierung erreicht ist. Diese Parameter sind für jede besondere Beschichtungsmasse unterschiedlich, wobei es für jede Beschichtungsmasse eine ganz bestimmte charakteristische Kombination von Frequenz und Feldstärke der Wechselfelder gibt, bei der sich die magnetischen Partikel möglichst homogen in der Beschichtungsmasse verteilen.

Zahlreiche Versuche und Beobachtungen haben zu dem Ergebnis geführt, daß die Frequenzen der beiden Wechselfelder im Bereich zwischen 5 und 100 Hz liegen. Die Feldstärke liegt unterhalb der Koezitivkraft der verwendeten Magnetpartikel, was heute im allgemeinen der Bereich zwischen 8000 und 80000 A/m ist. Als besonders vorteilhaft hat es sich bei einigen Materialien herausgestellt, daß kein reines Rotationsfeld in der zu homogenisierenden und dispergierenden Beschichtungsmasse erzeugt wird, was durch Überlagerung von zwei senkrecht aufeinander stehenden Wechselfeldern gleicher Frequenz bei Frequenzkopplung erzielt ist. Vorteilhafter ist es oft, ein unregelmäßig rotierendes Feld zu erzeugen, beispielsweise durch Frequenzen in der Größenordnung von 10 Hz für das eine Wechselfeld und Frequenzen in der Größenordnung von etwa 26 oder 27 Hz für das zweite Wechselfeld. Dadurch entstehen ungleichförmig rotierende "Wackelfelder", die völlig unregelmäßig die Magnetpartikel in der Beschichtungsmasse bewegen und durcheinander bringen, derart, daß sie sich im wesentlichen auf jedes einzelne Magnetpartikel vereinzeln. Dies ist mit Sicherheit die beste Dispergierung und homogene Verteilung innerhalb des Materials.

Bei den Versuchen und Beobachtungen des Verhaltens der Magnetpartikel in der Beschichtungsmasse hat sich auch herausgestellt, daß die bestmögliche Orientierung der Magnetpartikel bei gleichzeitig völlig homogener Verteilung dann erzielt wird, wenn das Wechselfeld im Maximum der Amplitude abgeschaltet wird.

Gemäß der Erfindung wirken Magnetfelder, vorteilhafterweise rotierende und dabei wiederum unregelmäßig rotierende Magnetfelder auf die Beschichtungsmasse ein. Die Anwendung von Magnetfeldern wirkt derart, daß auf die einzelnen magnetischen Partikel ein mechanisches Moment ausgeübt wird, welches zu einer Orientierung der Magnetpartikel im Feld führt. Bei einer parallelen Ausrichtung der Partikel wird zunächst eine abstoßende Wirkung zwischen benachbarten Partikeln herbeigeführt. Dabei könnten sich Ketten bilden, die entlang der Feldlinien angeordnet sind. Die Anwendung von rotierenden Feldern jedoch bewirkt, daß die Bildung von Ketten unterbunden wird. Rotieren die Felder unregelmäßig, können sich auch hier keine der Rotationsrichtung folgende Ketten ausbilden. Durch die viskose Reibungskraft innerhalb der Trägermasse wird verhindert, daß sich Ketten mit den rotierenden Feldern drehen können. Auf diese Weise wird insgesamt die Formation irgendwelcher größeren Gebilde verhindert. Etwa bereits vorhandene Flockulate oder Agglomerationen, die sich wegen ihrer hohen viskosen Reibung nicht mit dem Rotationsfeld mitdrehen können, werden zerrissen.

Weitere Versuche und Messungen der Dispersion über einen längeren Zeitraum haben in überraschender Weise ergeben, daß die Einwirkung der magnetischen Felder auf die Beschichtungsmasse nur von kurzer Dauer sein braucht. Eine Einwirkung von zwei Sekunden bringt schon enorme Verbesserungen der Dispersion. Eine wesentlich längere Bearbeitungszeit von etwa mehr als zehn Sekunden bringt keine meßbare Verbesserung mehr. Messungen mit der Anordnung, die auch für eine gewisse Verbesserung der Dispersion anwendbar ist, wie sie in der vorangemeldeten EP-A-204 860 (Art 54-(3)) der Anmelderin, IBM Docket GE 985 007, beschrieben ist, haben darüber hinaus eine erstaunliche und überraschende Stabilität dieser verbesserten Dispersion ergeben. Die dort beschriebene Lösung macht Gebrauch von einem Wechselfeld in Verbindung mit einem Gleichstromfeld. Selbst mehrere Tage nach der Behandlung ist die Dispersion noch erheblich besser bzw. teilweise kaum merklich schlechter als unmittelbar nach der Behandlung gemäß dem erfindungsgemäßen Verfahren.

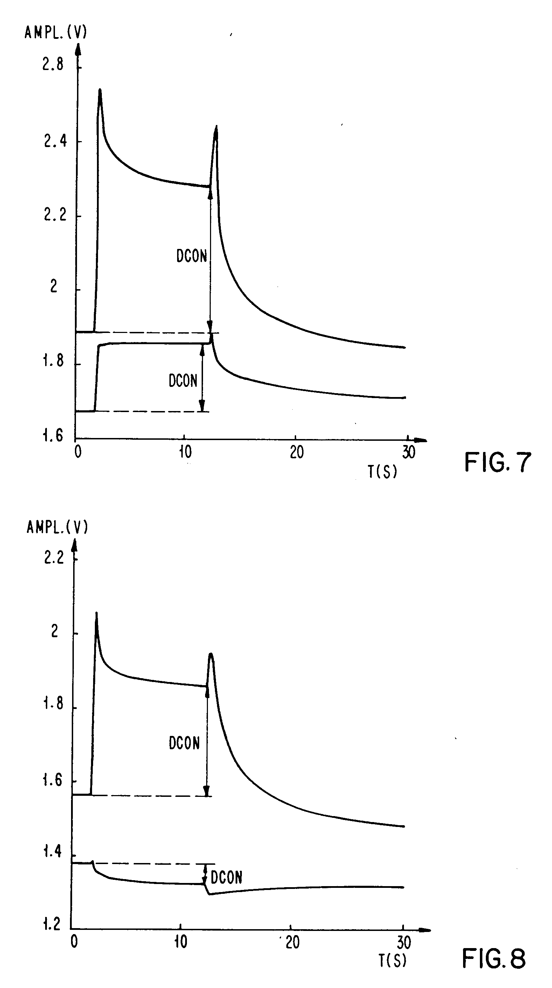

In den Fign. 7, 8 und 9 ist über der Zeit T, die in Sekunden angegeben ist, die Amplitude, die in Volt angegeben ist, aufgetragen. Die Amplitude stellt den Wert bzw. eine Aussage für die Dispersion bzw. für die Güte der Dispersion der magnetischen Partikel in der Trägermasse dar. Gemessen sind die Werte, insbesondere der sprunghaft ansteigende Wert DCON, mit dem Verfahren, welches in obengenannter europäischer Patentanmeldung beschrieben ist. Dabei ist jeweils die untere Kurve diejenige des Materials, das nicht dem erfindungsgemäßen Verfahren zur Dispergierung unterworfen worden ist und die obere diejenige desselben Materials, das jedoch zusätzlich mit Hilfe der Erfindung magnetisch dispergiert wurde. Aus dem Vergleich der beiden Kurven ist entnehmbar, daß ein wesentlicher Anstieg der Dispersion bzw. eine erhebliche Verbesserung der Dispersion aufgrund des erfindungsgemäßen Verfahrens zu erzielen ist. Das Material, welches in Fig. 7 dargestellt ist, ist ein Beschichtungsmaterial, bei dem die Partikel mit einem gewissen Anteil einer Oberflächenbenetzungs-Komponente (Surfaktant) überzogen sind. Diese Komponente umgibt die einzelnen Magnetpartikel, so daß diese weniger gut zusammenkleben.

Fig. 8 zeigt ein Material, das ohne diese vorstehend genannte Komponente auskommt. Es ist also das übliche Material mit den weit verbreitet üblichen Ferritmagnetpartikeln, insbesondere $\gamma$ $Fe_2O_3$-Teilchen. Man sieht, daß gerade dort eine erhebliche Verbesserung der Dispergierung durch die zusätzliche Magnetdispergierung auftritt.

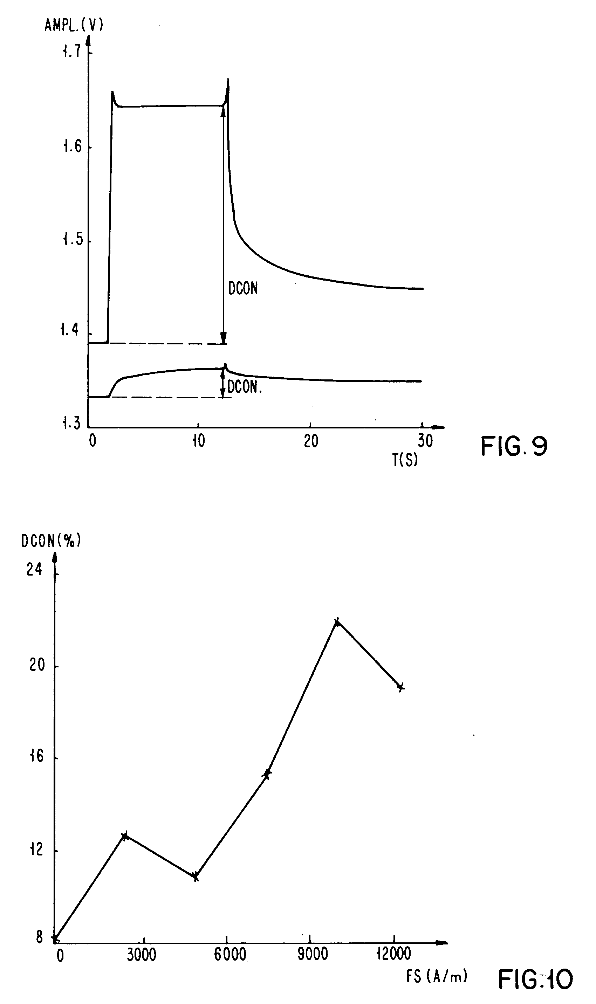

In Fig. 9 ist ein Material mit höherer Viskosität des Bindermaterials gezeigt, bei dem im übrigen als Magnetpartikel Chromdioxydpartikel verwendet werden. Die obere Kurve zeigt auch dort die erhebliche Verbesserung der Dispersion der Teilchen in der Trägermasse nach Behandlung mit dem erfindungsgemäßen Verfahren.

In Fig. 10 ist über der Feldstärke FS, gemessen in A/m, das Maß DCON in Prozent aufgetragen, wobei das Maß DCON angibt, um wieviel Prozent die Dispergierung der magnetischen Partikel in der Trägermasse in Abhängigkeit von der angelegten Feldstärke verbessert wird. Dabei ist erkenntlich, daß bei etwa 10 500 A/m ein Maximum erzielt wird. Selbstverständlich ist auch hier zu beachten, daß diese Kurve Ergebnis der Untersuchung eines bestimmten Materials ist. Bei anderen Materialien kann der Wert für die optimale Feldstärke ein anderer sein. Mit Hilfe der Erfindung ist es jedoch möglich, die optimalen Werte für das jeweilige Material zu bestimmen und dann in der Praxis anzuwenden.

Gemäß einer weiteren vorteilhaften Ausgestaltung der erfindungsgemäßen Anordnung ist es möglich, die in Fig. 1 gezeigte Anordnung von Elektromagneten, entweder in der dortigen oder in der in den Fign. 3 und 4 dargestellten Ausführung, um den Austrittsstutzen 56 (vgl. Fig. 5) anzuordnen. Damit ist unmittelbar vor der Austritts-bzw. Beschichtungsdüse 55 die Möglichkeit gegeben, dort im Rohrsystem bzw. im Rohrstutzen 56 vorhandenes Beschichtungsmaterial vor der Auftragung durch Austritt aus der Düse 55 auf den zu beschichtenden Träger magnetisch zu dispergieren und damit zu verbessern. Falls in bestehenden Beschichtungsanlagen das sogenannte Todvolumen in einem derartigen Rohrstutzen 56 nicht ausreichend genug sein sollte, ist es möglich, diesen Rohrstutzen 56 größenmäßig so zu gestalten, daß er beispielsweise ausreichend viel Volumen aufweist, um einen Aufzeichnungsträger, wie beispielsweise eine Platte vollständig zu beschichten. Ist eine Anordnung, wie in Fig. 1 gezeigt, um den Rohrstutzen 56 (vgl. Fig. 5) angeordnet, so wird die darin befindliche Beschichtungsmasse durch das magnetische Drehfeld in ständiger Bewegung gehalten, so daß neben der Verbesserung der Dispergierung auch eine Vermeidung der sonst üblichen Sedimentierung des Materials durch Absetzen von festeren Bestandteilen in Ecken, vermieden wird. Das magnetische sich drehende Feld bzw. das "Wackelfeld" führt also dazu, daß sich die Beschichtungsmasse ständig in Bewegung befindet und somit auch die Bildung von Ablagerungen im Todvolumen vermieden wird.

Magnetische Partikel enthaltende Beschichtungsmasse für die Herstellung magnetischer Aufzeichnungsträger, die entsprechend dem erfindungsgemäßen Verfahren in einer erfindungsgemäß gestalteten Anordnung magnetisch dispergiert sind, weisen eine wesentlich homogenere Verteilung der Magnetpartikel in dem Bindersystem auf. Dadurch ist es möglich, magnetische Aufzeichnungsträger mit verbesserten Eigenschaften, wie höhere Aufzeichnungsdichte bzw. und/oder auch geringere Schichtdicke herzustellen. Das Problem von Fehlstellen bzw. von Stellen auf dem Aufzeichnungsträger, bei dem zu wenig oder zu viel Magnetpartikel vorhanden sind, ist damit auch wesentlich verringert. Somit liefert die vorliegende Erfindung einen entscheidenden Beitrag zur Verbesserung magnetischer partikularer Beschichtungsmassen und letztlich zur Herstellung von partikularen magnetischen Aufzeichnungsträgern.

**Patentansprüche**

1.　Verfahren zur Verbesserung der Dispersion von magnetischen Partikeln, die zur Bildung einer magnetischen Beschichtungsmasse in einem Harz-/Lösungsmittel flüssig dispergiert sind, wobei die Beschichtungsmasse von einem magnetischen Rotationsfeld durchsetzt wird, das aus mindestens zwei Wechselfeldern unterschiedlicher Frequenz, insbesondere 10 und 27 Hz, gebildet wird und deren Parameter Frequenz, Feldstärke und Dauer so gewählt werden, daß sich die magnetischen Partikel möglichst homogen in der flüssigen Trägermasse verteilen.

2. Verfahren nach Anspruch 1,
dadurch gekennzeichnet, daß
die Amplitude der beiden Wechselfelder unterschiedlicher Frequenz gleich gewählt ist und die magnetische Feldstärke knapp unterhalb der Koerzitivstärke der magnetischen Partikel in der Beschichtungsmasse gewählt ist.

3. Verfahren nach einem der vorigen Ansprüche,
dadurch gekennzeichnet, daß
die Frequenz zwischen 5 und 100 Hz und die magnetische Feldstärke unterhalb der Koerzitivkraft der magnetischen Partikel, insbesondere zwischen 8000 und 80000 A/m gewählt ist.

4. Verfahren zur Ermittlung der Parameter gemäß Anspruch 1, bzw. der Ansprüche 2 oder 3,
dadurch gekennzeichnet, daß
eine dünne Filmschicht (65) aus flüssiger Beschichtungsmasse in einem Mikroskop im Durchlicht bei etwa 200facher Vergrößerung betrachtet wird,
durch geeignete Anordnung von Elektromagneten (60) ein in Frequenz, Stärke und Dauer variables magnetisches Rotationsfeld in der Ebene der Filmschicht (65) der Beschichtungsmasse erzeugt wird, durch Beobachtung des Durchlichtbildes diejenige Frequenz und Stärke ermittelt wird, die der möglichst guten Homogenisierung (und ggf. Ausrichtung) der Partikel in der Beschichtungsmasse entspricht, und diese ermittelten, für die bestimmte Beschichtungsmasse charakterisierenden, typischen Werte registriert werden.

5. Anordnung zur Durchführung des Verfahrens nach einem der Ansprüche 1 bis 4,
dadurch gekennzeichnet, daß
mindestens zwei im Winkel zueinander angeordnete Elektromagnete (1, 2) um ein die Beschichtungsmasse führendes Rohr (3) herum angeordnet sind derart, daß das zwischen einander zugeordneten Polen (4, 6 bzw. 5, 7) der Elektromagnete (1, 2) erzeugte magnetische Rotationsfeld im wesentlichen senkrecht zur Achse des Rohres (3) steht, und daß die Elektromagnete (1, 2) mit einem in Frequenz, Amplitude und Dauer veränderbaren Strom (9, 10 bzw. 12, 13) beaufschlagt sind.

6. Anordnung nach Anspruch 5,
dadurch gekennzeichnet, daß
die Beschichtungsmasse im Rohr (3) eine Fließgeschwindigkeit hat, die eine zur Homogenisierung ausreichende Verweildauer im Bereich des Homogenisierungsfeldes sicherstellt.

7. Anordnung nach Anspruch 5,
dadurch gekennzeichnet, daß
das Rohr (3, 54) dasjenige (56) ist, welches zur Düse (55) eine Beschichtungspistole führt und zwischen der Düse (55) einerseits und dem Zufluß und Abfluß der die Beschichtungsmasse führenden Umlaufleitung (54) angeordnet ist, wobei die Beschichtungspistole Teil einer Anlage zur Beschichtung von insbesondere plattenförmigen Trägern mit der Beschichtungsmasse ist.

8. Anordnung nach Anspruch 7,
dadurch gekennzeichnet, daß
das Volumen des Rohres (56) derart gewählt ist, daß die darin enthaltene Beschichtungsmasse ausreicht, um die Beschichtung eines einzelnen Trägers, insbesondere eines plattenförmigen Trägers durchzuführen, ohne daß dabei nicht durch das von den umgebenden Elektromagneten homogenisierte Beschichtungsmasse vom Zufluß seitens der Umlaufleitung (54) zum zu beschichtenden Träger gelangt.

**Claims**

1. Method for improving the dispersion of magnetic particles which for forming a magnetic coating compound are in liquid dispersion in a resin/solvent, wherein the coating compound is permeated by a magnetic rotary field consisting of at least two alternating fields of different frequency, in particular 10 and 27 Hz, whose parameters frequency, field strength and duration are chosen such that the magnetic particles are substantially homogeneously distributed in the liquid carrier compound.

2. Method according to claim 1,
characterized in that the amplitude of the two alternating fields of different frequency is chosen to be identical and the magnetic field strength is just below the coercive force of the magnetic particles in the coating compound.

3. Method according to any one of the preceding claims,
characterized in that the frequency is chosen between 5 and 100 Hz and the magnetic field strength below the coercive force of the magnetic particles, in particular between 8000 and 80000 A/m.

4. Method for determining the parameters according to claim 1 and claim 2 and 3, respectively,

characterized in that

a thin film (65) of liquid coating compound is viewed under a microscope in transmission magnified about 200 times,

by suitably arranged electromagnets (60), a magnetic rotary field, whose frequency, strength and duration are variable, is produced in the plane of the film (65) of the coating compound,

by viewing the transmitted image, that frequency and strength are determined which correspond to an optimum homogenization (and, if necessary, alignment) of the particles in the coating compound, and

the values thus determined, which are characteristic and typical of the particular coating compound, are stored.

5. Arrangement for implementing the method according to any one of the claims 1 to 4, characterized in that at least two electromagnets (1, 2), positioned at an angle relative to each other, are arranged around a coating compound carrying tube (3) such that the magnetic rotary field generated between associated poles (4, 6 and 5, 7, respectively) of the electromagnets (1, 2) is substantially perpendicular to the axis of the tube (3), and that the electromagnets (1, 2) are subjected to a current (9, 10 and 12, 13, respectively) whose frequency, amplitude and duration are variable.

6. Arrangement according to claim 5, characterized in that the coating compound in the tube (3) has a flow rate which is such that in the area of the homogenization field said compound is retained for a time sufficient for homogenization.

7. Arrangement according to claim 5, characterized in that the tube (3, 54) is the one (56) that leads to the nozzle (55) of a coating gun and that is arranged between the nozzle (55) and the inlet and outlet of the coating compound carrying circulating pipe (54), the coating gun forming part of a system for coating in particular disk-shaped carriers with the coating compound.

8. Arrangement according to claim 7, characterized in that the volume of the tube (56) is chosen such that the coating compound contained therein is sufficient to coat a single carrier, in particular a disk-shaped carrier, without coating compound not homogenized by the surrounding electromagnets being transferred from the inlet of the circulating pipe (54) to the carrier to be coated.

**Revendications**

1. Procédé pour l'amélioration de la dispersion de particules magnétiques qui sont dispersées dans une résine/solvant à l'état liquide afin de former une masse de revêtement magnétique, **selon lequel** la masse de revêtement est traversée par un champ de rotation magnétique, qui est constitué d'au moins deux champs alternants de fréquences différentes, notamment 10 et 27 Hz, et dont les paramètres de fréquence, d'intensité de champ et de durée sont choisis de façon que les particules magnétiques se répartissent d'une manière la plus homogène possible dans la masse porteuse liquide.

2. Procédé selon la revendication 1, **caractérisé** en ce que les amplitudes des deux champs alternants de fréquences différentes sont choisies identiques, et l'intensité de champ magnétique est choisie juste en dessous de l'intensité coercitive des particules magnétiques dans la masse de revêtement.

3. Procédé selon l'une des revendications précédentes, **caractérisé** en ce que la fréquence est choisie entre 5 et 100 Hz, et l'intensité de champ magnétique est choisie en dessous de la force coercitive des particules magnétiques, notamment entre 8000 et 80000 A/m.

4. Procédé pour la détermination de paramètres selon la revendication 1 ou les revendications 2 ou 3, **caractérisé** en ce qu'une mince couche pelliculaire (65) de la masse de revêtement liquide est observée au microscope sous lumière transmise avec un grossissement d'environ 200 fois, un champ de rotation magnétique de fréquence, intensité et durée variables est produit dans le plan de la couche pelliculaire (65) de masse de revêtement par une disposition appropriée d'électroaimants (60) et, en observant l'image obtenue par transmission, on détermine la fréquence et l'intensité qui correspondent à la meilleure homogénéisation possible (et éventuellement orientation) des particules dans la masse de revêtement, et ces valeurs typiques ainsi déterminées, caractéristiques de la masse de revêtement donnée, sont enregistrées.

5. Disposition pour la mise en oeuvre du procédé selon l'une des revendications 1 à 4, **caractérisée** en ce qu'au moins deux électroaimants (1, 2), disposés en angle l'un par rapport à l'autre, sont disposés, autour d'un tube (3) guidant la masse de revêtement, de telle sorte que le champ de rotation magnétique produit entre des pôles mutuellement associés (4, 6 ou 5, 7) des électro-aimants (1, 2) est sensiblement perpendiculaire à l'axe du tube (3), et en ce que les électroaimants (1, 2) sont sollicités par un courant électrique (9, 10 ou 12, 13) de fréquence, amplitude et durée variables.

6. Disposition selon la revendication 5, **caractérisée** en ce que la masse de revêtement possède dans le tube (3) une vitesse d'écoulement qui garantit une durée de séjour dans la région du champ d'homogénéisation qui soit suffisante pour obtenir l'homogénéisation.

7. Disposition selon la revendication 5, **caractérisée** en ce que le tube (3, 54) est celui (56) qui mène à la buse (55) d'un pistolet d'enduction, et il est disposé entre la buse (55) d'une part et, d'autre part, l'entrée et la sortie de la conduite de circulation (54) guidant la masse d'enduction, le pistolet d'enduction faisant partie d'une installation pour enduire de la masse de revêtement des supports notamment en forme de plaques.

8. Disposition selon la revendication 7, **caractérisée** en ce que le volume du tube (56) est choisi de telle sorte que la masse de revêtement qui y est contenue suffit à réaliser l'enduction d'un support individuel, notamment d'un support en forme de plaque, sans que, ce faisant, de la masse de revêtement non homogénéisée par les électroaimants entourants atteigne le support à enduire en provenant de l'entrée de la conduite de circulation (54).

FIG. 1

FIG. 2

FIG. 5

FIG. 6

FIG. 3

FIG. 4

FIG. 7

FIG. 8

13

AMPL.(V)

FIG. 9

DCON(%)

FS (A/m)    FIG. 10

14